# NEUE EUROPÄISCHE PATENTSCHRIFT

(11) **EP 1 294 466 B2**
(45) Veröffentlichungstag und Bekanntmachung des Hinweises auf die Entscheidung über den Einspruch: **30.04.2014**
(45) Hinweis auf die Patenterteilung: 31.08.2005
(21) Anmeldenummer: 01957832.7
(22) Anmeldetag: 08.06.2001
(51) Int. Cl.: B01D 45/08, F01N 3/037

(54) **PARTIKELFALLE UND VERFAHREN ZUM ABSCHEIDEN VON PARTIKELN AUS DEM STROM EINES FLUIDS**
PARTICLE TRAP FOR SEPARATING PARTICLES FROM THE FLOW OF A LIQUID, METHOD FOR SEPARATING PARTICLES FROM THE FLOW OF A LIQUID AND USE OF SAID PARTICLE TRAP
PIEGE A PARTICULES DESTINE A EXTRAIRE DES PARTICULES D'UN COURANT DE FLUIDE, PROCEDE D'EXTRACTION DE PARTICULES D'UN COURANT DE FLUIDE, ET UTILISATION D'UN PIEGE A PARTICULES

(30) Priorität: 27.06.2000 DE 10031200
(43) Veröffentlichungstag der Anmeldung: 26.03.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); REIZIG, Meike, 53579 Erpel (DE); TREIBER, Peter, 40789 Monheim (DE)
(74) Vertreter: Kahlhöfer, Hermann
(86) Internationale Anmeldenummer: PCT/EP2001/006529
(87) Internationale Veröffentlichungsnummer: WO 2002/000326

(56) Entgegenhaltungen:
- EP-A- 0 839 566
- EP-A2- 0 849 444
- EP-A2- 0 900 922
- DE-A- 3 502 448
- DE-A1- 3 744 265
- DE-A1- 4 206 812
- DE-A1- 4 234 931
- DE-T2- 69 703 857
- DE-U1- 8 900 467
- US-A- 3 966 443
- US-A- 4 597 262
- US-A- 4 895 083
- US-A- 5 857 326

## Beschreibung

Die Erfindung betrifft eine Partikelfalle zum Abscheiden von Partikeln aus dem Strom eines Abgases eines Kraftfahrzeuges, mit mehreren von dem Abgas durchströmten Strömungskanälen. Die Erfindung betrifft weiterhin ein Verfahren zum Abscheiden von Partikeln aus dem Strom eines Abgases, und schließlich betrifft die Erfindung auch die Verwendung einer Partikelfalle.

Eine Partikelfalle der eingangs genannten Art dient dazu, Feststoffpartikel, die in einem strömenden Fluid enthalten sind, aus der Strömung abzuscheiden. Besondere praktische Bedeutung haben derartige Partikelfallen bei der Reinigung von Dieselabgasen von Fahrzeugen. Hierbei muss die Partikelfalle durch Oxidation der Partikel regenerierbar sein. Sie wird in ein Rohr, wie z. B. in den Abgasstrang eines Kraftfahrzeuges, einbaubar sein.

Partikel in den Abgasen eines Kraftfahrzeuges lagern sich oft an der Beschichtung und/oder an der Außenwand, wie z. B. im Abgasstrang und/oder an der Außenwand wie z. B. im Abgasstrang und/oder im Katalysator des Kraftfahrzeuges an. Bei Laständerungen werden sie dann in Form einer Partikelwolke, wie z. B. einer Rußwolke ausgestoßen.

Herkömmlich werden zum Abscheiden der Partikel Siebe eingesetzt, die man teilweise auch als Filter bezeichnet. Siebe können zwar grundsätzlich die Partikel auffangen, haben jedoch zwei erhebliche Nachteile: Zum einen können sie verstopfen, und zum anderen bewirken sie einen unerwünschten Druckabfall. Werden keine Siebe eingesetzt, so besteht die Gefahr, dass sich der Wabenkörper des Katalysators verstopft, d. h. die Poren der Edelmetalle werden abgedeckt, und es können weder Schadstoffe noch Sauerstoff an den durch die Partikel abgedeckten Stellen an die Edelmetalle diffundieren. Zudem müssen gesetzliche Werte für Kraftfahrzeugemissionen eingehalten werden, die ohne Partikelreduktion überschritten würden. Es besteht daher der Bedarf, Auffangelemente für Abgaspartikel zu schaffen, die die Nachteile der Siebe und Filter vermeiden und die Wirksamkeit der Katalysatoren nicht beeinträchtigen.

Eine Partikelfalle, bei der eine Ablenkung der Abgasströmung hin zu einem porösen Material gelenkt wird, geht beispielsweise aus der US 5,857,326 hervor. Dieses Dokument betrifft eine Abgasleitung, in der eine spiralförmige Wand eingesetzt ist, die sich longitudinal durch die Abgasleitung hindurch erstreckt. Auf der Innenseite der Abgasleitung ist eine poröse Schicht vorgesehen, die als Partikelfalle dient. Beim Strömen des Abgases durch die Abgasleitung wird durch die spiralförmige Wand eine Zentrifugalkraft auf im Abgas enthaltene Partikel ausgeübt. Das hat zur Folge, dass die Partikel nach außen, also hin zu der porösen Schicht auf der Innenseite der Abgasleitung abgelenkt werden. Die dort offenbarte Vorrichtung weist jedoch eine sehr geringe Filterfläche auf und erfordert erheblichen Montageaufwand bei der Herstellung. Zusätzlich tritt ein nicht unerheblicher Druckverlust hinsichtlich des Abgasstromes über die Länge der spiralförmig ausgebildeten Wand auf. Das hat unter anderem unerwünschte Auswirkungen auf die Motorleistung.

Weiter ist aus der EP 839 566 ein Partikelabscheider bekannt, der zur Separierung von Rußpartikeln eines Dieselmotors geeignet sein soll. Die Partikelabscheidung erfolgt im wesentlichen nach dem Trägheitsprinzip, da zunächst die Strömungsrichtung des Abgases beeinflusst wird, wobei die Partikel ihre ursprüngliche Flugbahn im wesentlichen beibehalten und so in einem Filter gesammelt bzw. regeneriert werden. Ein beschriebene Konzept geht von einem einzelnen, mittig im Strömungskanal angeordneten Zylinder aus, an dessen Ende sich ein Filter befindet. Das die Partikel enthaltene Abgas wird von dem Zylinder durch eine Art Düse geführt, wobei sich die Partikel im zentralen Bereich anordnen und die Strömung direkt im Anschluss turbulent nach außen gelenkt wird. Der komplexe Aufbau und die damit verbundenen Schwierigkeiten bei der Entfernung der gefilterten Partikel bereiten Probleme bei mobilen Anwendungen.

Der Erfindung liegt daher die Aufgabe zugrunde, eine Partikelfalle und ein Verfahren der eingangs genannten Art zu schaffen, die mit möglichst hoher Effektivität Partikel aus dem Strom eines Abgases eines Kraftfahrzeuges abscheiden, wobei die abgeschiedenen Partikel später durch Oxidation entfernbar sind und die Partikelfalle somit regenerierbar ist.

Diese Aufgabe wird bei einer Partikelfalle der angegebenen Art mit den Merkmalen des Anspruchs 1 gelöst. Es wird also vorgesehen, dass die Wand jedes Strömungskanals zumindest Bereiche aus porösem oder hochporösem Material aufweist und das jeder Strömungskanal als Umlenk- oder Leitstruktur wirkende Einbauten in derartiger Anordnung aufweist, dass die Partikel aus der Strömung zu den Bereichen aus porösem oder hochporösem Material hingelenkt werden. Weiter ist der mit den Umlenk- und Leitstrukturen beeinflusste Querschnitt des Strömungskanals über die Länge des Kanals ungleich.

Hinsichtlich des eingangs genannten Verfahrens besteht die erfindungsgemäße Lösung der Aufgabe gemäß Anspruch 10 in einem Verfahren zum Abscheiden von Partikeln aus dem Strom eines Abgases eines Kraftfahrzeuges in einer Partikelfalle, bei dem durch zumindest eine Umlenk- oder Leitstruktur in jedem mehrerer Strömungskanäle der Partikelfalle die Partikel eines die Partikelfalle durchströmenden Fluids gegen eine poröse oder hochporöse Kanalwand geschleudert oder gelenkt werden. Weiter ist der mit den Umlenk- und Leitstrukturen beeinflusste Querschnitt des Strömungskanals über die Länge des Kanals ungleich.

Überraschenderweise hat sich nämlich herausgestellt, dass die Partikel, die durch die Einbauten aus der Strömung zu den Bereichen aus porösem oder hochporösem Material hingelenkt werden, durch Interception und/oder Impaktion an der porösen Kanalwand haften bleiben. Für das Zustandekommen dieser Wirkung sind die Druckunterschiede im Strömungsprofil des strömenden Fluids von Bedeutung. Durch die Umlenkungen können zusätzliche lokale Unterdruck- und Überdruckverhältnisse entstehen, die zu einem Filtrationseffekt durch die poröse Wand führen, weil die Druckunterschiede ausgeglichen werden müssen.

Die Partikelfalle ist im Gegensatz zu geschlossenen Sieb- oder Filtersystemen offen, weil keine Strömungssackgassen vorgesehen sind. Diese Eigenschaften kann in dem Fall auch zur Charakterisierung der Partikelfalle dienen, wie z. B. eine Blickoffenheit von 20 % besagt, dass in einer Querschnittsbetrachtung ca. 20 % der Fläche durchschaubar sind. Bei einem 600 cpsi-Träger mit d (hydraulisch) = 0,8 mm entspräche das einer Fläche von > 0,1 mm².

Als Material der Partikelfalle eignet sich Metall, Kunststoff, Keramik etc., wobei bei der Ausbildung der Strömungskanäle zumindest der Teil der Kanalwand, der den Einbauten ungefähr gegenüberliegt, porös ist.

Als poröses Material kann jeder poröse oder hochporöse Sinter- und/oder Faserstoff eingesetzt werden, wobei neben dem Abscheide- und Haftungsverhalten gegenüber Rußpartikeln (etwa große geometrische Oberfläche, große Anströmfläche, passende Tiefe der Struktur) auch die Formstabilität, Festigkeit und die Korrosionsbeständigkeit des porösen oder hochporösen Materials eine Rolle spielen.

Die erfindungsgemäße Partikelfalle und das erfindungsgemäße Verfahren sind besonders bedeutsam in ihrer Anwendung auf Wabenkörper, wie sie von den Katalysatoren von Kraftfahrzeugen bekannt sind. Eine poröse Kanalwand wird dann beispielsweise durch Bildung des gesamten Wabenkörpers aus porösem Material realisiert. Bei der Bildung des Wabenkörpers aus porösem oder hochporösem Material ist die Durchströmbarkeit des porösen Materials insofern auch von Interesse, als durch komplett poröse Kanalwände eine radiale Durchströmung der Partikelfalle realisierbar ist.

Als Kanalwand wird die Kanalwand in der gesamten Länge des Strömungskanals oder ein Teil der gesamten Kanalwand bezeichnet.

Durch die Umlenk- oder Leitstruktur, eben die Einbauten, werden Partikel aus dem Abgas bei bestimmten Geschwindigkeiten gegen die poröse Wand gelenkt, wo sie haften. In der Partikelfalle wird die Abscheidung der Partikel nach dem Prinzip "Schläger" und "Fänger" realisiert, wobei die Umlenkstruktur als "Schläger" und die Partikel zum "Fänger" der porösen Kanalwand oder Zwischenschicht, hinlenken. Die Strukturierung der Strömungskanäle innerhalb einer Partikelfalle kann ebenso variieren.

Der Querschnitt des Strömungskanals ist so bemessen, dass auch die kleinste Stelle im Kanal Partikel einer durchschnittlichen Größe durchlässt. Der Querschnitt wird durch die Umlenk- oder Leitstrukturen beeinflusst und ist ungleich über die Länge des Strömungskanals.

Eine bevorzugte Ausführung der erfindungsgemäßen Partikelfalle besteht darin, dass der Bereich aus porösem oder hochporösem Material durch eine Zwischenlage gebildet ist, die an der nicht porösen Kanalwand angebracht ist. Auf diese Weise ergibt sich eine größere Freiheit in der Auswahl der Werkstoffe.

Die praktische Ausführung der erfindungsgemäßen Partikelfalle ist besonders vorteilhaft, wenn gemäß einer Weiterbildung die Einbauten aus mindestens einem Vorsprung, Höcker oder Noppen bestehen, der dem Bereich aus porösem oder hochporösem Material gegenüberliegend und ggf. axial versetzt aus der Kanalwand vorspringend angeordnet ist. Auf diese Weise lassen sich die Einbauten fertigungstechnisch einfach und an optimalen Stellen verwirklichen.

Dabei lässt sich in der Weise vorgehen, dass gemäß vorteilhafter Weiterbildungen in Strömungsrichtung des Abgases hintereinander mehrere Vorsprünge, Höcker, oder Noppen angeordnet sind, die in Strömungsrichtung fortschreitend zunehmend weiter von der Kanalwand in das Innere des Strömungskanals hineinragen. Dabei kann man gemäß einer vorteilhaften Ausgestaltung auch eine gruppenweise Anordnung der Vorsprünge, Höcker oder Noppen mit einer bereichsweisen Erstreckung auch in Umfangsrichtung der Kanalwand vorsehen.

Durch die Anpassung der Umlenk- und Leitstrukturen und die Strukturierung der Strömungskanäle kann beispielsweise der Effekt erzielt werden, dass innerhalb einer Partikelfalle in aufeinanderfolgenden Teilbereichen zuerst die Partikel, die mit einer ersten Strömungsgeschwindigkeit von den Strukturen umgelenkt werden, gegen die poröse Kanalwand gelenkt werden, dann die Partikel mit einer zweiten, beispielsweise höheren Strömungsgeschwindigkeit, die an den kleineren Umlenkstrukturen keine Umlenkung erfahren haben, usw.. Je nach Betriebszustand eines Fahrzeuges bietet die Partikelfalle in diesem Fall für jede Strömungsgeschwindigkeit eine Abscheidemöglichkeit.

Ebenso können durch die Geometrie der Umlenk- und Leitstrukturen die Strömungsgeschwindigkeit und der Strömungsdruck des die Partikelfalle durchfließenden Abgases manipuliert und einer optimierten Abscheidungsrate angepasst werden. So wird beispielsweise durch die zunehmende radiale Erstreckung der Vorsprünge, Höcker oder Noppen in das Innere des Strömungskanals hinein erreicht, dass nicht nur die Partikel bei einer höheren Geschwindigkeit noch umgelenkt werden, sondern auch diejenigen Partikel, die der porösen Kanalwand eng gegenüberliegen; der Diffusionsweg, den ein Partikel durch die Strömung bis zu dem Wandbereich aus porösem oder hochporösem Material zurücklegen muss, wird auf diese Weise immer geringer.

Dabei hat sich als besonders vorteilhaft eine Partikelfalle erwiesen, deren als Umlenk- oder Leitstruktur wirkenden Einbauten jeweils zwischen 2% und 15%, insbesondere zwischen 4% und 8%, der im Abgas noch enthaltenen Partikel zu den Bereichen aus porösem oder hochporösem Material hinlenken. Entsprechende Versuche haben hervorgebracht, dass eine derart gestaltete Partikelfalle nur einen sehr geringen Druckabfall zur Folge hat, wobei bei einer ausreichenden Anzahl von in Strömungsrichtung hintereinander und/oder versetzt zueinander angeordneten Umlenk- oder Leitstrukturen dennoch eine sehr effektive Reinigung von Partikeln sichergestellt ist. Gegebenenfalls ist es hierbei auch möglich, mehrere solcher Partikelfallen mit jeweils wenigen Umlenk- oder Leitstrukturen in Reihe zu schalten, die gegebenenfalls gegeneinander abgestützt werden. Die Anzahl der Umlenk- oder Leitstrukturen ist insbesondere so zu wählen, dass zumindest eine statistische Umlenkung des gesamten Gasstromes hin zu dem bzw. durch das poröse Material erfolgt. Aus Versuchen ist derzeit bekannt, dass schon die Hintereinanderschaltung von 10 bis 15 solcher Umlenkstrukturen in Strömungsrichtung hintereinander zu einer Abscheideeffektivität von über 90% und sogar über 95% der in der Strömung enthaltenen Partikeln führt.

Dabei wird vorzugsweise die Umlenkung der noch im Abgas enthaltenen Partikeln durch eine entsprechende Ausgestaltung der Porosität des porösen oder hochporösen Materials und/oder der Größe der Umlenk- oder Leitstruktur der Partikelfalle bewirkt. Das bedeutet beispielsweise, dass eine geringere Umlenkung der Strömung mit kleiner ausgeführten Umlenkstrukturen erforderlich ist, wenn eine ausreichend große Porosität der Kanalwand gewährleistet ist. Dabei werden insbesondere Bereiche mit reduzierten Drücken in benachbarten Strömungswegen nahe, in Strömungsrichtung hinter, einer Umlenkstruktur erzeugt, die folglich einem Sog der Partikel in das poröse Material zur Folge haben. Bei einer entsprechenden Anpassung der Partikelfalle an die überwiegenden Strömungsbedingungen des anströmenden Abgases wird eine besonders effektive Absonderung von Partikeln bei sehr geringem Druckverlusten sichergestellt.

Im Hinblick auf die praktische Anwendung ist die Weiterbildung wichtig, dass die erfindungsgemäße Partikelfalle Bestandteil eines Wabenkörpers mit einer Vielzahl von Strömungskanälen sein kann. In dieser Ausführungsform eignet sich die Partikelfalle besonders für die Kraftfahrzeugtechnik. Zur Abdeckung verschiedener (dynamischer) Lastfälle des Antriebssystems eines Kraftfahrzeugs wird ein konisches System oder ein Element in Konusform bevorzugt. Solche Systeme, wie z. B. in der WO 93/20339 beschrieben, haben sich erweiternde Kanäle, so dass bei jedem Massendurchsatz an irgendeiner Stelle der Kanäle, wenn sie mit entsprechenden Umlenkungs- oder Verwirbelungsstrukturen versehen werden, besonders günstige Verhältnisse für das Auffangen von Partikeln entstehen.

Das erfindungsgemäße Verfahren zum Abscheiden von Partikeln aus dem Strom eines Abgases eines Kraftfahrzeuges wird vorteilhaft dadurch vervollkommnet, dass eine kontinuierliche oder eine diskontinuierliche Regeneration der porösen oder hochporösen Kanalwand stattfindet. Dabei sind verschiedene Hilfsmittel in Kombination oder einzeln zuschaltbar. Hilfsmittel sind einerseits vorgeschaltete Katalysatoren, die genügend NO₂ zur Verfügung stellen und/oder vorgeschaltete Zugaben von Additiven, die eine Oxidation der Partikel und damit die Regeneration der Partikelfalle begünstigen.

Begleitend kann auch ein NO₂-Speicher strömungstechnisch mit der Partikelfalle verbunden sein, beispielsweise ein Speicher aus Perowskit, wie BaSnO₃ oder einem anderen Barium-Zinn-Perowskit oder ein NO₂-Speicher aus Barium-Aluminat und/oder einem aus einem Bariumzeolith.

Wenn vorteilhafterweise das erfindungsgemäße Verfahren durch Hilfsmittel unterstützt wird, die in Abhängigkeit vom Belegungsgrad der Partikelfalle freigesetzt werden, so kann das nach Maßgabe eines Druckverlustes ausgelöst werden, der durch die Partikelfalle ermittelt wird.

Die erfindungsgemäße Partikelfalle wird besonders vorteilhaft im Abgasstrang eines Dieselmotors verwendet. Dabei ist besonders vorteilhaft die Verwendung in Kombination mit einem Rußfilter. Der Rußfilter wird in diesem Fall natürlich wesentlich kleiner sein als bei Abgassträngen ohne Partikelfalle.

Die Erfindung sowie das technische Umfeld werden anschließend näher erläutert. Dabei zeigen:
- Fig. 1: die grundsätzliche Funktion einer Partikelfalle und des erfindungsgemäßen Verfahrens,
- Fig. 2: eine Partikelfalle, bei der der Bereich aus porösem oder hochporösem Material durch eine Zwischenlage gebildet ist,
- Fig. 3: eine erfindungsgemäße Ausführung mit Einbauten, die in Strömungsrichtung fortschreitend zunehmend weiter von der Kanalwand in das Innere des Strömungskanals hineinragen,
- Fig. 4: eine Partikelfalle mit hintereinander angeordneten Einbauten, die sich sämtlich um den gleichen Betrag in das Innere des Strömungskanals hinein erstrecken, und
- Fig.5: eine gegenüber einem nachfolgenden Katalysator-Trägerkörper abgestützte Ausführungsform der Partikelfalle.

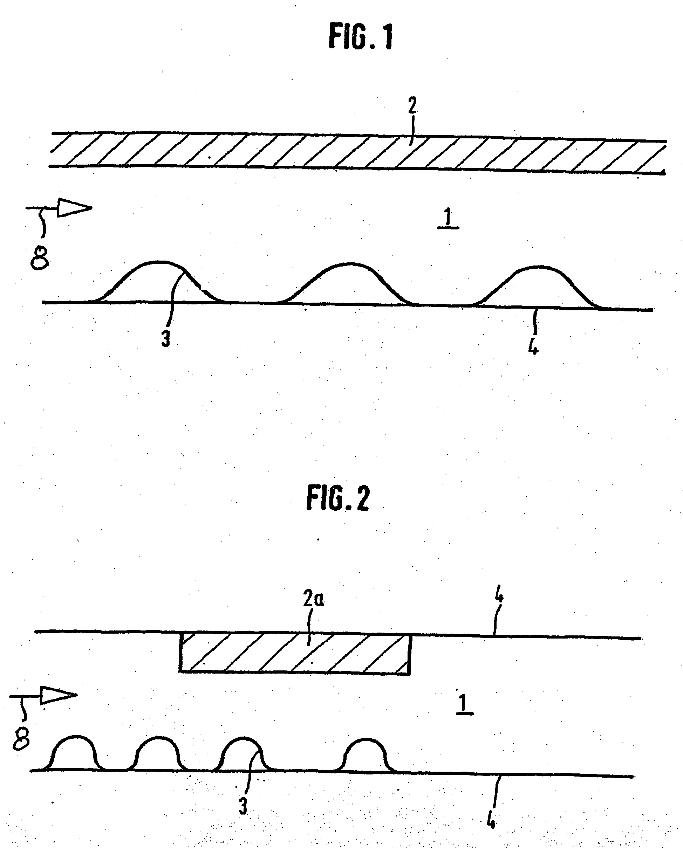

Fig. 1 zeigt einen Strömungskanal 1, in dem das mit Partikeln belastete Abgas in Strömungsrichtung 8 (Richtung des Pfeils) strömt. Die Kanalwand 2 ist in diesem Falle vollständig porös. Der Kanalwand gegenüber liegen Einbauten in Form von Vorsprüngen, Höckern oder Noppen 3. Die Kanalwand 4 ist an dieser Stelle nicht porös. Bei einer geringen Strömungsgeschwindigkeit werden durch die Vorsprünge, Höcker oder Noppen 3 die Partikel des Abgases erfasst und auf die poröse Kanalwand 2 hin umgelenkt. Dort bleiben sie haften. Sie können bei der Regeneration der Partikelfalle beispielsweise durch. Oxidation mit Sauerstoff bei hoher Temperatur oder durch Oxidation mit Stickstoffdioxid bei tieferen Temperaturen entfernt werden.

Die Fig. 2 zeigt ebenfalls einen Strömungskanal 1, in dem das mit Partikeln belastete Abgas entlang der Strömungsrichtung 8 (Pfeil) strömt. Die Kanalwand 4 ist hier durchweg nicht porös. Jedoch ist eine Zwischenlage 2a aus porösem Material angeordnet. Gegenüber dieser Zwischenlage 2a und leicht versetzt zu ihr sind die Vorsprünge, Höcker oder Noppen 3 angeordnet, so dass auch hier die Partikel aus dem Abgas an die poröse Zwischenlage 2a hingelenkt werden, wo sie haften bleiben.

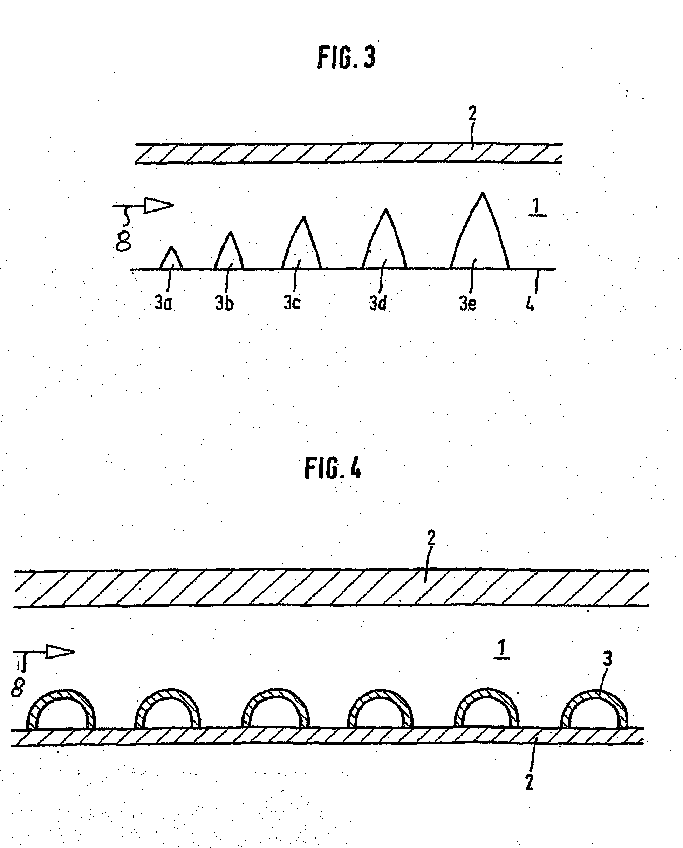

Die Fig. 3 zeigt grundsätzlich dieselbe Anordnung wie Fig. 1; jedoch sind hier die in Strömungsrichtung 8 hintereinander angeordneten Vorsprünge, Höcker, Noppen 3a, 3b, 3c, 3d, 3e so ausgebildet, dass ihre Erstreckung radial in den Strömungsquerschnitt hinein immer größer wird. Auf diese Weise werden auch noch bei höherer Geschwindigkeit die Partikel umgelenkt, und es besteht ein immer geringerer Abstand zu dem Wandbereich, der porös oder hochporös ausgebildet ist, so dass auch die Wege bis zu dem Haftbereich für die Partikel immer kleiner werden.

Im Falle der Fig. 4 besteht der gesamte dargestellte Ausschnitt des Strömungskanals 1 aus porösem oder hochporösem Material, also die Vorsprünge, Höcker, Noppen 3 ebenso wie die beiden Kanalwände 2. Die radiale Erstreckung der Vorsprünge, Höcker oder Noppen ist in diesem Fall stets gleich (nicht erfindungsgemäß). Dabei ist es möglich, aber nicht zwingend, dass überall dasselbe poröse Material zum Einsatz kommt.

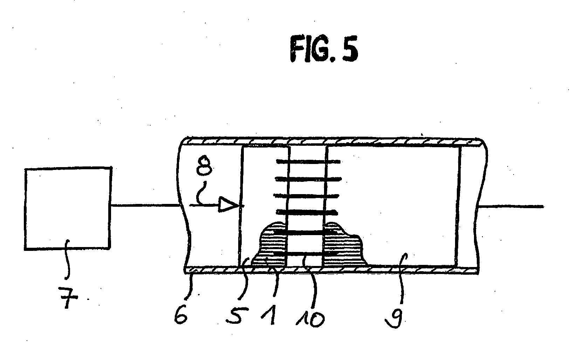

Die Fig. 5 zeigt schematisch eine Anordnung einer Ausführungsform der Partikelfalle 5 im Abgasstrang 6 eines Verbrennungsmotor 7, wobei hier die Partikelfalle 5 direkt gegen einen in Strömungsrichtung 8 nachfolgend angeordneten Katalysator-Trägerkörper 9 abgestützt ist. Dazu wird die Partikelfalle 5 mit Stützstiften 10 gehalten, die in den Strömungskanälen 1 und vorzugsweise gleichmäßig über dem Querschnitt der Katalysator-Trägerkörpers 9 bzw. der Partikelfalle 5 angeordnet sind. Mit Verbrennungsmotoren 7 sind hierbei neben Otto-Motoren insbesondere mit Dieselkraftstoff betriebene Motoren von PKWs und/oder Motorrädern gemeint. Die Stützstifte 10 sind dabei so gestaltet, dass diese in etwa den gleichen Querschnitt aufweisen wie die Strömungskanäle 1 und sich zumindest teilweise in diese erstrecken. Dabei kann der Katalysator-Trägerkörper 9 auch durch eine andere Komponente zur Reinigung des Abgases ersetzt werden, wie beispielsweise einen Rußfilter.

### Bezugszeichenliste

- 1: Strömungskanal
- 2: poröse Kanalwand
- 2a: Zwischenlage
- 3: Vorsprung
- 4: Kanalwand
- 5: Partikelfalle
- 6: Abgasstrang
- 7: Verbrennungsmotor
- 8: Strömungsrichtung
- 9: Katalysator-Trägerkörper
- 10: Stützstift

## Patentansprüche

1. Partikelfalle (5) zum Abscheiden von Partikeln aus dem Strom eines Abgases eines Kraftfahrzeuges, mit mehreren von dem Abgas durchströmten Strömungskanälen (1), **dadurch gekennzeichnet, dass** die Wand (2, 4) jedes Strömungskanals (1) zumindest Bereiche aus porösem oder hochporösem Material aufweist und dass jeder Strömungskanal (1) als Umlenk- oder Leitstruktur wirkende Einbauten in derartiger Anordnung aufweist, dass die Partikel aus der Strömung zu den Bereichen aus porösem oder hochporösem Material hingelenkt werden und weiter der mit den Umlenk- oder Leitstrukturen beeinflusste Querschnitt des Strömungskanals (1) über die Länge des Kanals ungleich ist.

2. Partikelfalle (5) nach Anspruch 1, **dadurch gekennzeichnet, dass** der Bereich aus porösem oder hochporösem Material durch eine Zwischenlage (2a) gebildet ist, die an der nicht porösen Kanalwand (4) angebracht ist.

3. Partikelfalle (5) nach Anspruch 1 oder 2, **dadurch gekennzeichnet, dass** die Einbauten aus mindestens einem Vorsprung, Höcker, Noppen (3) oder dgl. bestehen, der dem Bereich aus porösem oder hochporösem Material gegenüberliegend und ggs. axial versetzt aus der Kanalwand (2, 4) vorspringend angeordnet ist.

4. Partikelfalle (5) nach Anspruch 3, **dadurch gekennzeichnet, dass** in Strömungsrichtung (8) des Fluids hintereinander mehrere Vorsprünge, Höcker, Noppen (3a, 3b, 3c, 3d, 3e) oder dgl. angeordnet sind, die in Strömungsrichtung (8) fortschreitend zunehmend weiter von der Kanalwand (4) in das Innere des Strömungskanals (1) hineinragen.

5. Partikelfalle (5) nach einem der Ansprüche 3 bis 4, **gekennzeichnet durch** eine gruppenweise Anordnung der Vorsprünge, Höcker, Noppen oder dgl. mit einer bereichsweisen Erstreckung auch in Umfangsrichtung der Kanalwand (4).

6. Partikelfalle (5) nach einem der Ansprüche 1 sowie 3 bis 5, **dadurch gekennzeichnet, dass** der gesamte Strömungskanal (1) und /oder die Einbauten aus porösem oder hochporösem Material bestehen.

7. Partikelfalle (5) nach einem der vorhergehenden Ansprüche, **dadurch gekennzeichnet, dass** sie Bestandteil eines Wabenkörpers mit einer Vielzahl von Strömungskanälen (1) ist.

8. Partikelfalle (5) nach einem der vorhergehenden Ansprüche, **dadurch gekennzeichnet, dass** die als Umlenk- oder Leitstruktur wirkenden Einbauten so gestaltet sind, dass durch sie jeweils zwischen 2% und 15%, insbesondere zwischen 4% und 8%, der im Abgas noch enthaltenen Partikel zu den Bereichen aus porösem oder hochporösem Material hinlenkbar sind.

9. Partikelfalle (5) nach Anspruch 8, **dadurch gekennzeichnet, dass** die Umlenkung der noch im Abgas enthaltenen Partikeln durch eine entsprechende Ausgestaltung der Porosität des porösen oder hochporösen Materials und/oder der Größe der Umlenk- oder Leitstruktur bewirkt wird.

10. Verfahren zum Abscheiden von Partikeln aus dem Strom eines Abgases eines Kraftfahrzeuges in einer Partikelfalle (5), wobei der mit den Umlenk- oder Leitstrukturen beeinflusste Querschnitt des Strömungskanals (1) über die Länge des Kanals, und damit insbesondere auch die Strömungsgeschwindigkeit des Abgases, ungleich ist, bei dem durch zumindest eine Umlenk- oder Leitstruktur in jedem mehrerer Strömungskanäle (1) der Partikelfalle (5) die Partikel eines die Partikelfalle (5) durchströmenden Abgases gegen eine poröse oder hochporöse Kanalwand (2, 4) geschleudert oder gelenkt werden.

11. Verfahren nach Anspruch 10, bei dem in Abhängigkeit von der Strömungsgeschwindigkeit in verschiedenen Teilbereichen der Partikelfalle (5) die Partikel gegen eine poröse oder hochporöse Kanalwand (2) gelenkt werden.

12. Verfahren nach Anspruch 10 oder 11, **gekennzeichnet durch** eine kontinuierliche oder diskontinuierliche Regeneration der porösen oder hochporösen Kanalwand (2).

13. Verfahren nach Anspruch 12, bei dem die Regeneration durch Hilfsmittel unterstützt wird, die in Abhängigkeit vom Belegungsgrad der Partikelfalle (5) freigesetzt werden.

14. Verfahren nach einem der Ansprüche 10, bis 13, bei dem durch die mindestens eine Umlenk- oder Leitstruktur jeweils zwischen 2% und 15%, insbesondere zwischen 4% und 8%, der im Abgas noch enthaltenen Partikel zu den Bereichen aus porösem oder hochporösem Material hingelenkt werden.

15. Verwendung einer Partikelfalle (5) nach einem der Ansprüche 1 bis 9 im Abgasstrang eines Verbrennungsmotors zum Abscheiden von Partikeln aus dem Abgasstrom des Motors.

16. Verwendung einer Partikelfalle (5) nach einem der Ansprüche 1 bis 9 in Kombination mit einem Rußfilter zum Abscheiden von Partikeln aus dem Strom eines Abgases.

## Claims

1. Particle trap (5) for separating particles out of the flow of an exhaust gas of a motor vehicle, having several flow channels (1) through which the exhaust gas flows, **characterized in that** the wall (2, 4) of each flow channel (1) has at least regions which are made from porous or highly porous material, and **in that** each flow channel (1) has internals which act as a diverting or guiding structure, in an arrangement which is such that the particles are diverted out of the flow to the regions made from porous or highly porous material and furthermore the cross section of the flow channel (1), being influenced by the diverting or guiding structures, is different over the length of the channel.

2. Particle trap (5) according to Claim 1, **characterized in that** the region made from porous or highly porous material is formed by an interlayer (2a) which is arranged on the nonporous channel wall (4).

3. Particle trap (5) according to Claim 1 or 2, **characterized in that** the internals comprise at least one projection, hump, protuberance (3) or the like, which is arranged so as to project out of the channel wall (2, 4) opposite the region made from porous or highly porous material and, if appropriate, in an axially offset fashion.

4. Particle trap (5) according to Claim 3, **characterized in that**, as seen in the direction of flow (8) of the fluid, a plurality of projections, humps, protuberances (3a, 3b, 3c, 3d, 3e) or the like are arranged one behind the other, projecting progressively further from the channel wall (4) into the interior of the flow channel (1) as seen in the direction of flow (8).

5. Particle trap (5) according to one of Claims 3 to 4, **characterized by** a grouped arrangement of the projections, humps, protuberances or the like, with regions also extending in the peripheral direction of the channel wall (4).

6. Particle trap (5) according to one of Claims 1 and 3 to 5, **characterized in that** the entire flow channel (1) and/or the internals consist of porous or highly porous material.

7. Particle trap (5) according to one of the preceding claims, **characterized in that** it is part of a honeycomb body with a multiplicity of flow channels (1).

8. Particle trap (5) according to one of the preceding claims, **characterized in that** the internals which act as a diverting or guiding structure are designed in such a way that they can be used to deflect in each case between 2% and 15%, in particular between 4% and 8%, of the particles still contained in the exhaust gas toward the regions made from porous or highly porous material.

9. Particle trap (5) according to Claim 8, **characterized in that** the particles which are still contained in the exhaust gas are diverted by means of a suitable design of the porosity of the porous or highly porous material and/or of the size of the diverting or guiding structure.

10. Process for separating particles out of the flow of an exhaust gas of a motor vehicle in a particle trap (5), wherein the cross section of the flow channel (1), being influenced by the diverting or guiding structures, being different over the length of the channel, and thus in particular also the flow velocity of the exhaust gas is different, in which the particles of an exhaust gas flowing through the particle trap (5) are thrown or diverted onto a porous or highly porous channel wall (2, 4) by at least one diverting or guiding structure in each of several flow channels (1) of the particle trap (5).

11. Process according to Claim 10, in which the particles are diverted onto a porous or highly porous channel wall (2) as a function of the flow velocity in various partial regions of the particle trap (5).

12. Process according to Claim 10 or 11, **characterized by** continuous or discontinuous regeneration of the porous or highly porous channel wall (2).

13. Process according to Claim 12, in which the regeneration is assisted by auxiliaries which are released as a function of the degree of occupation of the particle trap (5).

14. Process according to one of Claims 10 to 13, in which in each case between 2% and 15%, in particular between 4% and 8%, of the particles which are still contained in the exhaust gas are diverted toward the regions made from porous or highly porous material by the at least one diverting or guiding structure.

15. Use of a particle trap (5) according to one of Claims 1 to 9 in the exhaust system of an internal-combustion engine for separating particles out of the exhaust system of the engine.

16. Use of a particle trap (5) according to one of Claims 1 to 9 in combination with a soot filter for separating particles out of the flow of an exhaust gas.

## Revendications

1. Piège à particules (5) destiné à extraire des particules d'un courant de gaz d'échappement d'un véhicule automobile, avec plusieurs canaux d'écoulement (1) parcourus par les gaz d'échappement, **caractérisé en ce que** la paroi (2, 4) de chaque canal d'écoulement (1) présente au moins des zones en matériau poreux ou hautement poreux et **en ce que** chaque canal d'écoulement (1) présente des chicanes agissant comme une structure de déviation ou de guidage, en une disposition telle que les particules soient déviées hors de l'écoulement vers les zones en matériau poreux ou hautement poreux et en outre la section transversale du canal d'écoulement (1) influencée par les structures de déviation ou de guidage n'est pas uniforme sur la longueur du canal.

2. Piège à particules (5) selon la revendication 1, **caractérisé en ce que** la zone en matériau poreux ou hautement poreux est formée par une couche intermédiaire (2a), qui est placée sur la paroi non poreuse (4) du canal.

3. Piège à particules (5) selon la revendication 1 ou 2, **caractérisé en ce que** les chicanes se composent au moins d'une saillie, d'une bosse, de boutons (3) ou analogues, qui sont disposés en face de la zone en matériau poreux ou hautement poreux et sont éventuellement décalés axialement en saillant hors de la paroi de canal (2, 4).

4. Piège à particules (5) selon la revendication 3, **caractérisé en ce que** plusieurs sailles, bosses, boutons (3a, 3b, 3c, 3d, 3e) ou analogues se succèdent dans la direction d'écoulement (8) du fluide, et pénètrent plus loin de la paroi de canal (4) dans l'intérieur du canal d'écoulement (1) à mesure que l'on progresse dans la direction d'écoulement (8).

5. Piège à particules (5) selon l'une quelconque des revendications 3 à 4, **caractérisé par** une disposition groupée des saillies, bosses, boutons ou analogues avec une extension locale également dans la direction périphérique de la paroi de canal (4).

6. Piège à particules (5) selon l'une quelconque des revendications 1 ainsi que 3 à 5, **caractérisé en ce que** tout le canal d'écoulement (1) et/ou les chicanes se composent de matériau poreux ou hautement poreux.

7. Piège à particules (5) selon l'une quelconque des revendications précédentes, **caractérisé en ce qu'**il fait partie d'un corps en nid d'abeilles avec une multiplicité de canaux d'écoulement (1).

8. Piège à particules (5) selon l'une quelconque des revendications précédentes, **caractérisé en ce que** les chicanes agissant comme une structure de déviation ou de guidage sont configurées de telle manière que chaque fois entre 2 % et 15 %, en particulier entre 4 % et 8 %, des particules encore contenues dans les gaz d'échappement puissent être déviées par elles vers les zones en matériau poreux ou hautement poreux.

9. Piège à particules (5) selon la revendication 8, **caractérisé en ce que** la déviation des particules encore contenues dans les gaz d'échappement est provoquée par une configuration correspondante de la porosité du matériau poreux ou hautement poreux et/ou de la grandeur de la structure de déviation ou de guidage.

10. Procédé d'extraction de particules d'un courant de gaz d'échappement d'un véhicule automobile dans un piège à particules (5), dans lequel la section transversale du canal d'écoulement (1) influencée par les structures de déviation ou de guidage, et dès lors en particulier aussi la vitesse d'écoulement des gaz d'échappement, n'est pas uniforme sur la longueur du canal, dans lequel les particules de gaz d'échappement parcourant le piège à particules (5) sont accélérées ou déviées contre une paroi de canal (2, 4) poreuse ou hautement poreuse par au moins une structure de déviation ou de guidage dans chacun de plusieurs canaux d'écoulement (1) du piège à particules (5).

11. Procédé selon la revendication 10, dans lequel les particules sont déviées contre une paroi de canal (2) poreuse ou hautement poreuse en fonction de la vitesse d'écoulement dans différentes zones partielles du piège à particules (5).

12. Procédé selon la revendication 10 ou 11, **caractérisé par** une régénération continue ou discontinue de la paroi de canal poreuse ou hautement poreuse (2).

13. Procédé selon la revendication 12, dans lequel la régénération est aidée par des moyens auxiliaires, qui sont dégagés en fonction du degré de colmatage du piège à particules (5).

14. Procédé selon l'une quelconque des revendications 10 à 13, dans lequel chaque fois entre 2 % et 15 %, en particulier entre 4 % et 8 %, des particules encore contenues dans les gaz d'échappement, sont déviées vers les zones en matériau poreux ou hautement poreux par ladite au moins une structure de déviation ou de guidage.

15. Utilisation d'un piège à particules (5) selon l'une quelconque des revendications 1 à 9 dans la ligne des gaz d'échappement d'un moteur à combustion interne, pour extraire des particules du courant de gaz d'échappement du moteur.

16. Utilisation d'un piège à particules (5) selon l'une quelconque des revendications 1 à 9, en combinaison avec un filtre à suie pour extraire des particules d'un courant de gaz d'échappement.
